(19) **Europäisches Patentamt**

**European Patent Office**

**Office européen des brevets**

(11) **EP 1 359 637 B1**

(12) **EUROPÄISCHE PATENTSCHRIFT**

| | |
|---|---|
| (45) Veröffentlichungstag und Bekanntmachung des Hinweises auf die Patenterteilung:<br>**31.05.2006 Patentblatt 2006/22** | (51) Int Cl.:<br>***H01M 10/40*** *(2006.01)*    ***H01M 2/16*** *(2006.01)* |

(21) Anmeldenummer: **03008620.1**

(22) Anmeldetag: **15.04.2003**

(54) **Verfahren zur Herstellung eines galvanischen Elements**

Method for manufacturing of a galvanic element

Procédé de fabrication d' un élément galvanique

(84) Benannte Vertragsstaaten:
**AT BE BG CH CY CZ DE DK EE ES FI FR GB GR HU IE IT LI LU MC NL PT RO SE SI SK TR**

(30) Priorität: **02.05.2002 DE 10219423**

(43) Veröffentlichungstag der Anmeldung:
**05.11.2003 Patentblatt 2003/45**

(73) Patentinhaber: **VARTA Microbattery GmbH**
**30419 Hannover (DE)**

(72) Erfinder:
• **Birke, Peter, Dr.**
**73479 Ellwangen (DE)**
• **Birke-Salam, Fatima, Dr.**
**73479 Ellwangen (DE)**
• **Wöhrle, Thomas, Dr.**
**73479 Ellwangen (DE)**

• **Haug, Peter, Dr.**
**73479 Ellwangen (DE)**
• **Holl, Konrad, Dr.**
**73434 Aalen-Dewangen (DE)**
• **Stelzig, Heinrich**
**73494 Rosenberg (DE)**
• **Ilic, Dejan, Dr.**
**73479 Ellwangen (DE)**

(74) Vertreter: **Patentanwälte**
**Ruff, Wilhelm, Beier, Dauster & Partner**
**Postfach 10 40 36**
**70035 Stuttgart (DE)**

(56) Entgegenhaltungen:
**EP-A- 0 759 641         EP-A- 0 776 058**
**EP-A- 1 011 157         EP-A- 1 154 508**
**WO-A-99/19921          DE-A- 19 839 217**
**US-A- 5 418 091**

**Beschreibung**

Gegenstand der Erfindung ist ein Verfahren zur Herstellung eines galvanischen Elements mit mindestens einer lithiuminterkalierenden Elektrode und einem organischen Elektrolyten.

Bei galvanischen Elementen mit lithiuminterkalierenden Elektroden in Form von wiederaufladbaren 4 V Zellen muss der Separator eine Vielzahl von extremen Aufgaben erfüllen. Die üblicherweise kohlenstoffbasierte negative Elektrode besitzt in vollgeladenem Zustand der Zelle, dies sind in der Regel 4,2 V, eine Lithiumaktivität nahe eins, das heißt, obwohl das aktive Material eine Kohlenstoffmodifikation ist, kann bei voll geladener Zelle das reduzierende Potential mit dem von metallischem Lithium verglichen werden. Auf der positiven Seite kommen meist Lithium-Übergangsmetall-Oxide als Aktivmaterial zum Einsatz. Bei vollgeladener Zelle bringt dies ein sehr starkes Oxidationspotential mit sich, dem nur wenige Stoffe standhalten. Hinzu kommt, dass auch bei erhöhten Temperaturen zumindest kurzfristig die Stabilität einer vollgeladenen Zelle nicht in schädigendem Maße beeinträchtigt sein darf, wobei Temperaturen von bis zu 90° C und ein zeitlicher Bereich von wenigstens mehreren Stunden in Betracht gezogen werden müssen.

Aus diesem Grunde kommen in wiederaufladbaren Lithiumzellen standardmäßig Polyolefinseparatoren, die bspw. aus Polypropylen (PP), Polyethylen (PE) oder aus mehreren Lagen dieser Materialien gebildet sind, zum Einsatz. Diese erhalten über uni- oder biaxiale Verstreckung die notwendige Porenstruktur zur Aufnahme des flüssigen Elektrolyten und man nutzt bspw. den Schmelzpunkt von PE bei ca. 120° C, um diese Poren bei einem unbeabsichtigten Kurzschluss oder anderweitig bedingten Anstieg der Temperaturen im Zellinneren zu verschmelzen und dadurch einen sogenannten "Shut-down"-Effekt zu bewirken. Dies ist ein drastischer Anstieg des Innenwiderstandes, da durch den Porenschluss der flüssige Elektrolyt keine Leitfähigkeit mehr im Separator bereitstellen kann.

Das Dokument EP 0 951 080 B1 beschreibt einen Batterieseparator aus einer ersten und dritten mikroporösen Schicht, die eine zweite "Shut-down"-fähige mikroporöse Membran mittig einschließen, wobei die porösen Membranen über einen Verstreckungprozess hergestellt werden.

Es zeigt sich aber in der Praxis, dass dieser Effekt nicht immer zuverlässig funktioniert. Bei einem sehr kurzen und heftigen Temperaturanstieg kann der Shut-down-Mechanismus unter Umständen nicht mehr greifen. Solche drastischen Temperaturanstiege können vor allen Dingen beim Anstechen der Zelle von außen mit einem leitenden spitzen Gegenstand sowie bei der Überladung der Zelle auftreten. Diese negative Umkehr des Shut-down Mechanismus hängt damit zusammen, dass Polyolefinseparatoren beim Schmelzen schrumpfen. Je höher und heftiger der plötzliche Energieanstieg ist, umso stärker das Schrumpfen, und es werden nicht nur Poren geschlossen, sondern der ganze Separator schrumpft derart ungünstig zusammen, dass die Zelle kurzgeschlossen wird und dadurch noch heftiger unter Flammbildung reagiert. Die Herstellungsweise der uni- oder biaxialen Verstreckung zur Verporung der Separatoren kann sich dabei noch zusätzlich ungünstig auswirken, da der Separator in Streckrichtung aufgrund des herstellungsbedingten Memoryeffektes wie eine Feder wieder zusammenschrumpft. Insbesondere bei großen Lithiumzellen, wie für 42 Volt Bordsysteme oder Traktionszwecke, ist eine Lösung des zuvor dargestellten Separatorproblems essentiell.

Das Dokument EP 1 096 591 A1 beschreibt eine gelartige Separator-Membran mit einem Binderpolymer aus der Gruppe Polyacrylnitril, Polymethylmethacrylat, Polyvinylchlorid, Polyvinylsulfon, Polyethylenglykoldiacrylat, Polyvinylpyrrolidon, Polyvinylidendifluorid oder Mischungen aus diesen mit einem keramischen Material ausgewählt aus $Al_2O_3$, $SiO_2$, $TiO_2$, $ZrO_2$ oder Mischungen hiervon.

Das Dokument EP 1 043 795 A2 beschreibt eine Kompositelektrode, die aus aktivem Elektrodenmaterial, Leitfähigkeitsverbesserer, einem polymeren Elektrolyten und einem mineralischen, natürlich vorkommenden Festkörperelektrolyten besteht.

Aus der Druckschrift US 6,057,061 ist ein Batterieseparator bestehend aus einem orientierten, Ethlylenvinylalkohol enthaltenen mikroporösen Film mit einem chemisch inerten Füllmaterial ausgewählt aus glasartiger Keramik, Polytetrafluorethylen (PTFE) oder kondensierten, gummiartige Eigenschaften aufweisenden Kunststoffpartikelchen zu entnehmen.

Das Dokument EP 1 011 157 A2 beschreibt ein Separatormaterial für wiederaufladbare Lithiumbatterien mit einem Polyvinylidendifluorid-Hexafluorpropylen als Bindemittel, in dem Partikel mit einem höheren Erweichungspunkt dispergiert sind.

Die Druckschrift DE 199 16 109 A1 beschreibt als Separatoren in elektrochemischen Zellen geeignete Verbundkörper, wobei mindestens eine erste Schicht, die mindestens einen Feststoff enthält, auf mindestens eine zweite Schicht bestehend aus einem konventionellen Separatormaterial, aufgetragen ist.

Im Dokument DE 200 10 080 U1 wird ein Akkumulator auf der Basis fester Ionenleiter mit einem zwischen positiver und negativer Elektrode angeordneten Festelektrolyten beschrieben, wobei die negative Elektrode zusätzlich aus Kohlenstoff-Nanostrukturen gebildet ist.

Die WO 99 19921 A offenbart Mischungen, die als Festelektrolyt oder zur Herstellung eines Separators für elektrochemische Zellen dienen können und einen Li-Ionen leitenden Feststoff und eine polymere Masse enthalten. Die polymere Masse kann unter anderem auf einer halogenhaltigen, olefinischen Verbindung wie beispielsweise Vinylidenfluorid aufbauen und enthält neben der halogenhaltigen Verbindung zwingend eine hochmolekulare Verbindung mit Polyethersegmenten.

Die DE 198 39 217 A betrifft eine pastöse Masse zur Verwendung als elektrochemisches Bauelement, umfassend eine heterogene Mischung aus einer Polymermatrix, einer anorganischen Festsubstanz und einem festen Ionen- und/oder Elektronenleiter. Eine flüssige Elektrolytkomponente wird nicht verwendet.

Der Erfindung liegt die Aufgabe zugrunde, ein Verfahren zur Herstellung eines galvanischen Elements mit Brandschutzeigenschaften anzugeben, bei dem gefährliches Schrumpfen des Separators bei kurzfristigem sehr starkem Temperaturanstieg in der Zelle unterbunden und die Entflammung der Zelle unterdrückt wird, dessen Separator aber gleichzeitig eine verbesserte ionische Leitfähigkeit aufweist. Des weiteren besteht die Aufgabe der Erfindung darin, ein galvanischen Element mit verbesserten Brandschutzeigenschaften und einer verbesserten ionischen Leitfähigkeit bereitzustellen.

Diese Aufgabe wird bei durch das Verfahren nach Anspruch 1 sowie durch ein galvanisches Element nach Anspruch 11 gelöst. Weitere Ausgestaltungen des Verfahrens sind den Unteransprüchen zu entnehmen.

Jedes Lithiumsalz besitzt eine Eigenionenleitfähigkeit durch strukturelle Gitterplatzdefekte sowie insbesondere Oberflächendefekte an den Kornoberflächen.

Wird ein Separator mit einem festen keramischen Lithiumsalz, welches in einem polymeren Binder dispergiert ist, mit einem flüssigen Lithiumelektrolyten getränkt, so addieren sich die Einzelleitfähigkeiten $\sigma$

$$\sigma_{ges.} = \sigma_{ion,fest} + \sigma_{ion,Oberfläche} + \sigma_{ion,flüssig}$$

Dies ergibt in vorteilhafter Weise eine Erhöhung der ionischen Gesamtleitfähigkeit des Separators gegenüber einem inerten Polyolefinseparator, der seine Gesamtleitfähigkeit nur über die mit Flüssigelektrolyt befüllten Poren erreichen kann. Um einen möglichst geringen Übergangswiderstand der Kornoberfläche zu erreichen, werden vorzugsweise Korngrößen im Bereich eines $d_{50}$. Verteilungswertes von 1 $\mu$m verwendet. Dies ist ein Wert, der mit konventionellen Mahlverfahren noch erreichbar ist. Der Einsatz von festen Ionenleitern kann immer dann besonders effektiv gestaltet werden, wenn eine Phasengrenze fest-flüssig zu einem flüssigen Hilfselektrolyten oder -elektrode etabliert werden kann.

Das keramische Füllmaterial muss darüber hinaus als wichtige Eigenschaften noch ein weites elektrochemisches Stabilitätsfenster in Bezug auf Reduktion und Oxidation, keine oder extrem geringe Hygroskopie sowie geringe Materialkosten aufweisen. Nur wenige Verbindungen sind unter den eingangs genannten Bedingungen, Lithiumaktivität nahe eins auf der einen Seite, ein oxidatives Potential von mehr als 4 V gegen Lithium auf der anderen Seite, stabil. Dieses Stabilitätsfenster reduziert die Elemente auf wenige bevorzugte Hauptgruppenelemente wie Bor, Aluminium, Silizium, Phosphor, Stickstoff, Sauerstoff und Fluor. Dies ist auch durch die Anforderung an eine hohe elektronische Isolationsfähigkeit begründet, die wenigstens in einer elektronischen Restleitfähigkeit von weniger als $10^{-10}$ S/cm resultieren sollte. Übergangsmetalle, aber auch bereits Elemente mit hoher Ordnungszahl, können statt reiner Ionenleitung durch die gleichzeitige Aufnahme eines Elektrons eine schlagartige Leitfähigkeitserhöhung um mehrere Größenordnungen bewirken. Keramische Lithiumionenleiter wie $Li_5AlO_4 \cdot Li_4SiO_4$ zeigen ein hohes Stabilitätsfenster von 0 - 5,5 V, sind aber aufwendig herzustellen und sehr hygroskopisch. Bevorzugt werden daher Verbindungen verwendet, die natürlich in großen Mengen und akzeptabler Reinheit vorkommen und dabei weder hygroskopisch noch kostenintensiv sind. Beispiele für solche Salze sind Amblygonit, Lepidolith, Petalit sowie als häufigstes und wichtigstes Lithiummineral Spodumen, $LiAlSi_2O_6$. Als Glasbildner besitzt letzteres Salz noch einen erheblichen Vorteil, den man analog als "Super-Shut-down" bezeichnen kann. Wird die Glasbildnertemperatur erreicht, so zerfließt das keramische Material, das vorzugsweise in sehr hohen Mengen, Füllgraden von mindestens 60 Gew. %, vorzugsweise von mindestens 75 Gew. % eingesetzt wird. Dabei ist kein spontanes Schrumpfen wie bei Polyolefinseparatoren zu erwarten. Zudem erhöht der keramische Anteil die Sicherheit, da bei Missbrauch mehr inertes Material zur Flammdämpfung vorhanden ist. Insbesondere bei dem Einsatz eines Überladeadditivs ist ein keramischer Separator von erheblichem Vorteil, da er die guten Eigenschaften des letzteren noch in extrem günstiger Weise verstärken kann.

Die Füllgrade beziehen sich auf den Zustand bei der Einwaage aller Bestandteile ohne das Lösemittel. Als Binder wird ein Copolymer eingesetzt, um flexible Folien sowie einen Erweichungspunkt von weniger als 150° C zu ermöglichen. Hierzu wird das Copolymer Polyvinylidendifluorid-Hexafluorpropylen, PVDF-HFP, mit einem HFP-Anteil von 5-8 % verwendet. Um eine vorteilhafte Porenstruktur zu erreichen, kann der Rezeptur noch ein Plastifizierer beigemischt werden, der anschließend vor der Befüllung mit dem flüssigen organischen Elektrolyten wieder herausgewaschen wird.

Beispiele für Überladeadditive sind 3,5-Difluoranisol, 1,3,5-Trimethoxybenzol, 2-Methoxyethylether, Triethlylenglykoldimethylether, Tetraethylenglykoldimethylether, 1,2,4-Trifluorbenzol, Biphenyl, 1,2,3,4-Tetrafluorbenzol, 2,4,6-Trimethoxypyrimidin, 2,6-Dimethoxy-1,4-Benzoquinon und 2,4-Dimethoxybenzonitril. Der Wirkungsmechanismus dieser Additive scheint auf einem spannungsabhängigen Aufbrechen der vorzugsweise ringartigen Struktur zu beruhen, wobei diese Bruchstücke den flüssigen organischen Elektrolyten polymerisieren oder eine Oberflächenpassivierung der Kathode verursachen. Beim Überladen einer Lithiumionenzelle mit einer LiCoO$_2$ enthaltenden Elektrode - LiCoO$_2$ ist ein aufgrund vieler elektrochemischer Vorteile eingesetztes Standardmaterial - und einem Polyolefinseparator wird die Zelle bei Spannungen von ca. 4,8 V und mehr kritisch, d. h., sie steht kurz vor einem thermischen Durchgehen und Entflammung. Ein Überladeadditiv wird in diesem Spannungsbereich zersetzt und die Zersetzungsprodukte unterbinden binnen kürzester Zeit den inneren Stromfluss in der Zelle. Ist die Zersetzungsspannung des Additivs zu niedrig gewählt, so wird es auch den normalen Zellbetrieb negativ beeinflussen. Ein keramischer Separator kann nun in vorteilhafter Weise die oben genannten kritischen 4,8 V um einige 100 mV nach oben verschieben, was den Einsatz von Überladeadditiven mit günstigeren, da höher liegenden Zersetzungsspannungen gestattet. Ein Beispiel für ein solches Additiv ist das 1,2,4-Trifluorbenzol mit einer Zersetzungsspannung im Bereich von ca. 5,2 V, so dass bei einer maximalen Ladespannung der Zelle von 4,2 V im Betrieb ein Puffer von ca. 1 V besteht.

Beispiel:

Eine pastöse Masse für die negative Elektrode (Anode) wird hergestellt, indem 2887 g Kugelgraphit mit 82 g Leitruß, 371 g Binderpolymer (Polyvinylidendifluorid-Hexafluorpropylen) und 859 g Dibutylphthalat in 3 l Aceton innig vermischt werden und die so erhaltene Masse auf eine Polyesterträgerfolie ausgezogen und getrocknet wird.

Eine pastöse Masse für den Separator wird hergestellt, indem 3150 g Spodumen, 336 g Binderpolymer und 336 g Dibutylphthalat in 2,5 l Aceton innig vermischt werden und die so erhaltene Masse auf eine Polyesterträgerfolie ausgezogen und getrocknet wird.

Eine pastöse Masse für die positive Elektrode (Kathode) wird hergestellt, indem 2819 g LiCoO$_2$, 198 g Leitruß, 297 g Binderpolymer und 495 g Dibutylphthalat in 4,8 l Aceton innig vermischt und die so erhaltene Masse auf eine Polyesterträgerfolie ausgezogen und getrocknet wird.

Die negative Elektrode wird in 8,50 x 6,05 cm$^2$ Stücke ausgestanzt und bei 130° C beidseitig auf eine Kupferableitelektrode mit Ableiterfähnchen bei 30 kg laminiert. Der Separator wird sodann überstehend auf die so erhaltene negative Elektrode bei 110° C und einem Druck von 10 kg laminiert. Die positive Elektrode wird in 8,35 x 5,90 cm$^2$ Stücke ausgestanzt und bei 140° C und 20 kg Anpressdruck auf Aluminiumstreckmetall mit Ableiterfähnchen laminiert. Das Aluminiumstreckmetall ist dabei mit einer Adhäsionsschicht ("Primer") zur besseren Elektrodenhaftung vorbehandelt. Die so erhaltenen Kathoden werden beidseitig auf den Separator-Anodenverbund bei 120° C und 10 kg auflaminiert und der überstehende Separatorrand bis auf einen geringen Restüberstand beschnitten.

Danach wird der Plastifizierer Dibutylphthalat mittels Lösemittel aus den Bizellen herausgewaschen, um eine genügende Porosität für das Eindringen des Elektroyten bereitzustellen. Fünf solcher Bizellen werden an den Ableitfähnchen mit einem massiven Ni-Ableiter auf der negativen und einem Al-Ableiter auf der positiven Seite ultraschallverschweißt, der so erhaltene Stapel in beidseitig beschichtete tiefgezogene Aluminimumfolie verpackt und mit ca. 7 ml organischem Lithiumelektrolyten aktiviert.

Eine so hergestellte und voll geladene Zelle (4,2 V) reagiert bei einem Anstechen mit einem spitzen, leitenden Gegenstand weitaus moderater als eine vergleichbar hergestellte mit Polyolefinseparator. Beim Überladen einer gemäß obigem Beispiel hergestellten Zelle mit 12 V und 1 C (ca. 1,5 A) reagiert diese nur mit Rauchentwicklung und Abblasen von Gasen, während die vergleichbare Zelle mit Polyolefinseparator unter starker Entflammung und Hitzeentwicklung völlig verbrennt.

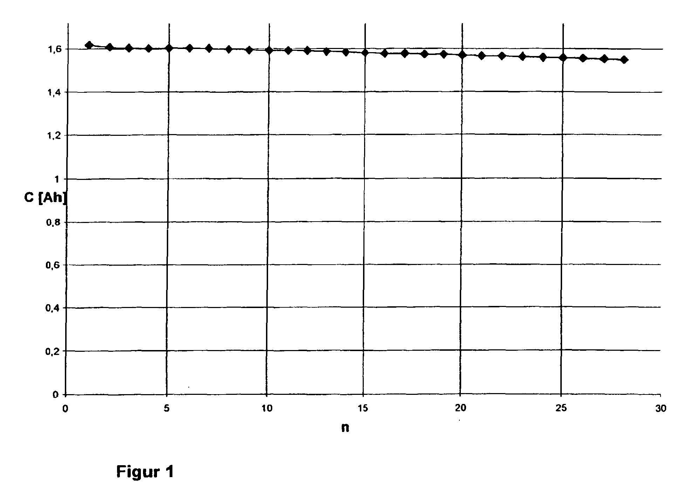

In Figur 1 ist die Kapazität C in Abhängigkeit von der Zyklenzahl n für eine gemäß Beispiel 1 hergestellte Zelle aufgetragen. Die Zelle wurde mit 1C (1,5 A) konstantem Strom auf 4,2 V geladen, die Spannung dann für 3 h gehalten und anschließend mit 1C (1,5 A) auf 3,0 V entladen. Aus dem geringen Abfall der so erhaltenen Kurven ist ersichtlich, dass die so hergestellten Zellen eine hohe Zuverlässigkeit besitzen.

**Patentansprüche**

**1.** Verfahren zur Herstellung eines galvanischen Elements mit mindestens einer lithiuminterkalierenden Elektrode und einem organischen Elektrolyten, mit den Schritten

- Zusammenfügen mindestens einer positiven Elektrode, mindestens einer negativen Elektrode und mindestens eines Separators zu einem Element,
- anschließendes Einbringen des Elements in ein Gehäuse,
- Tränken des Elements mit einem flüssigen organischen Elektrolyten, dessen Leitsalz Lithiumionen enthält und
- dichtes Verschließen des Gehäuses,

**dadurch gekennzeichnet, dass** als Separator eine poröse Matrix aus mindestens 60 Gew.% eines keramischen,

## EP 1 359 637 B1

Lithiumionen enthaltenden Materials und einem Copolymer aus Vinylidenfluorid und Hexafluorpropylen als Bindemittel verwendet wird, wobei der Anteil an Hexafluorpropylen im Copolymer zwischen 5 % und 8 % beträgt und sich die ionische Gesamtleitfähigkeit des Separators zusammensetzt aus den ionischen Leitfähigkeiten des keramischen Materials, des organischen Elektrolyten und dem reziproken spezifischen Übergangswiderstand der Phasengrenze zwischen Elektrolyt und keramischem Material.

2. Verfahren nach Anspruch 1 mit dem zusätzlichen Schritt der Herstellung des Separators, der das Lösen des Bindemittels in N-Methylpyrolidin-2-on oder in Aceton umfasst.

3. Verfahren nach einem der Ansprüche 1 oder 2, **dadurch gekennzeichnet, dass** das keramische Material ein natürlich vorkommendes Mineral ist.

4. Verfahren nach einem der Ansprüche 1 bis 3, **dadurch gekennzeichnet, dass** der Separator mindestens 75 Gew. % keramisches Material enthält.

5. Verfahren nach einem der Ansprüche 1 bis 4, **dadurch gekennzeichnet, dass** die elektronische Leitfähigkeit des keramischen Materials kleiner als $10^{-10}$ S/cm ist.

6. Verfahren nach einem der Ansprüche 1 bis 5, **dadurch gekennzeichnet, dass** das keramische Material ein Glasbildner ist.

7. Verfahren nach einem der Ansprüche 1 bis 6, **dadurch gekennzeichnet, dass** der organische Elektrolyt $LiPF_6$, Diethlycarbonat und Ethylencarbonat enthält.

8. Verfahren nach einem der Ansprüche 1 bis 7, **dadurch gekennzeichnet, dass** der organische Elektrolyt ein Additiv enthält, dessen Zersetzungsprodukte bei Überladung zu einem Zusammenbrechen des Ladestroms führen.

9. Verfahren nach Anspruch 8, **dadurch gekennzeichnet, dass** der Anteil des Additivs im organischen Elektrolyten 2-20 Gew.-% beträgt.

10. Verfahren nach Anspruch 8 oder 9, **dadurch gekennzeichnet, dass** das Additiv eine aromatische Verbindung, vorzugsweise Trifluorbenzol oder Biphenyl ist.

11. Galvanisches Element, herstellbar nach dem Verfahren nach einem der Ansprüche 1 bis 10.

## Claims

1. Method for manufacturing of a galvanig element having at least one lithium-intercalating electrode and an organic electrolyte, having the following steps:

   - assembly of at least one positive electrode, at least one negative electrode and at least one separator to form an element,
   - subsequent introduction of the element into a housing,
   - impregnation of the element with a liquid organic electrolyte whose conductive salt contains lithium ions, and
   - sealed closure of the housing,

   **characterized in that** a porous matrix composed of at least 60% by weight of a ceramic material which contains lithium ions and a copolymer composed of vinylidene fluoride and hexafluoropropylene as a binding agent is used as a separator, with the proportion of hexafluoropropylene in the copolymer being between 5% and 8% and the ionic overall conductivity of the separator being composed of the ionic conductivities of the ceramic material, of the organic electrolyte and of the reciprocal specific contact resistance of the phase boundary between the electrolyte and the ceramic material.

2. Method according to Claim 1, having the additional step of production of the separator, which comprises dissolving the binding agent in N-methylpyrrolidin-2-one or in acetone.

3. Method according to one of Claims 1 and 2, **characterized in that** the ceramic material is a naturally occurring

5

mineral.

4. Method according to one of Claims 1 to 3, **characterized in that** the separator contains at least 75% by weight of ceramic material.

5. Method according to one of Claims 1 to 4, **characterized in that** the electronic conductivity of the ceramic material is less than $10^{-10}$ S/cm.

6. Method according to one of Claims 1 to 5, **characterized in that** the ceramic material is a glass-forming substance.

7. Method according to one of Claims 1 to 6, **characterized in that** the organic electrolyte contains $LiPF_6$, diethyl carbonate or ethylene carbonate.

8. Method according to one of Claims 1 to 7, **characterized in that** the organic electrolyte contains an additive, whose decomposition products lead to collapse of the charging current in the event of overcharging.

9. Method according to Claim 8, **characterized in that** the proportion of the additive in the organic electrolyte is 2-20% by weight.

10. Method according to Claim 8 or 9, **characterized in that** the additive is an aromatic compound, preferably trifluorobenzene or biphenyl.

11. Electrochemical element, which can be produced using the method according to one of Claims 1 to 10.

## Revendications

1. Procédé de fabrication d'un élément galvanique ayant au moins une électrode intercalant du lithium et un électrolyte organique, avec les étapes

    - de combinaison d'au moins une électrode positive, d'au moins une électrode négative et d'au moins un diaphragme pour en faire un élément,
    - d'introduction ensuite de l'élément dans un boîtier,
    - d'imprégnation de l'élément à l'aide d'un électrolyte organique liquide, dont le sel conducteur contient des ions lithium et
    - de fermeture étanche du boîtier,

    **caractérisé en ce que** l'on utilise, en tant que diaphragme, une matrice poreuse constituée d'au moins 60% en poids d'un matériau céramique contenant des ions lithium et d'un copolymère en fluorure de vinylidène et en hexafluoropropylène en tant que liant, la proportion d'hexafluoropolymère dans le copolymère étant compris entre 5% et 8% et la conductibilité ionique globale du diaphragme se composant des conductibilités ioniques du matériau céramique, de l'électrolyte organique et de la résistance de transition spécifique réciproque de la limite de phases entre l'électrolyte et le matériau céramique.

2. Procédé selon la revendication 1, avec l'étape supplémentaire de la fabrication du diaphragme, qui comprend la dissolution du liant dans la N-méthylpyrrolidin-2-one ou dans l'acétone.

3. Procédé selon l'une quelconque des revendications 1 ou 2, **caractérisé en ce que** le matériau céramique est un minéral d'origine naturelle.

4. Procédé selon l'une quelconque des revendications 1 à 3, **caractérisé en ce que** le diaphragme contient au moins 75% en poids de matériau céramique.

5. Procédé selon l'une quelconque des revendications 1 à 4, **caractérisé en ce que** la conductibilité électronique du matériau céramique est inférieure à $10^{10}$ S/cm.

6. Procédé selon l'une quelconque des revendications 1 à 5, **caractérisé en ce que** le matériau céramique est un agent de formation de verre.

7. Procédé selon l'une quelconque des revendications 1 à 6, **caractérisé en ce que** l'électrolyte organique contient du $LiPF_6$, du carbonate de diéthyle et du carbonate d'éthylène.

8. Procédé selon l'une quelconque des revendications 1 à 7, **caractérisé en ce que** l'électrolyte organique contient un additif, dont les produits de décomposition en cas de surcharge conduisent à une rupture du courant de charge.

9. Procédé selon la revendication 8, **caractérisé en ce que** la proportion de l'additif dans l'électrolyte organique est de 2-20% en poids.

10. Procédé selon la revendication 8 ou 9, **caractérisé en ce que** l'additif est un composé aromatique, de préférence le trifluorobenzène ou le biphényle.

11. Élément galvanique, que l'on peut fabriquer conformément au procédé selon l'une quelconque des revendications 1 à 10.

**Figur 1**